(19) Europäisches Patentamt
European Patent Office
Office européen des brevets

(11) **EP 0 566 927 B1**

(12) **EUROPÄISCHE PATENTSCHRIFT**

(45) Veröffentlichungstag und Bekanntmachung des Hinweises auf die Patenterteilung:
26.08.1998 **Patentblatt 1998/35**

(51) Int. Cl.⁶: **A23G 1/21**, A23G 1/26, A23G 1/24, A23G 3/02, A23G 3/20

(21) Anmeldenummer: 93105732.7

(22) Anmeldetag: 07.04.1993

(54) **Verfahren und Vorrichtung zur Herstellung von Schokoladenartikeln**

Process and apparatus for making chocolate articles

Procédé et appareil de fabrication d'articles en chocolat

(84) Benannte Vertragsstaaten:
CH DE DK GB IT LI SE

(30) Priorität: 23.04.1992 DE 4213293

(43) Veröffentlichungstag der Anmeldung:
27.10.1993 **Patentblatt 1993/43**

(73) Patentinhaber:
**Winkler und Dünnebier Süsswarenmaschinen GmbH**
**56579 Rengsdorf (DE)**

(72) Erfinder:
• **Rüegg, Hanno**
**CH-8280 Kreuzlingen (CH)**
• **Vollmar, Dietrich**
**W-5457 Strassenhaus (DE)**

(74) Vertreter:
**Stachow, Ernst-Walther, Prof. Dr. et al**
**Lippert, Stachow, Schmidt & Partner**
**Patentanwälte**
**Postfach 30 02 08**
**51412 Bergisch Gladbach (DE)**

(56) Entgegenhaltungen:
| | |
|---|---|
| CH-A- 679 263 | DE-A- 1 111 919 |
| FR-A- 534 530 | FR-A- 1 247 971 |
| FR-A- 1 339 674 | US-A- 1 705 328 |
| US-A- 1 763 085 | |

**Beschreibung**

Die Erfindung betrifft ein Verfahren und eine Vorrichtung zur Herstellung von Schokoladenartikeln, insbesondere von Schokoladenhalbschalen und von Schokoladenhohlkörpern mit einer Einfüllöffnung zum Einbringen einer Füllung, durch Gießen von flüssiger Schokoladenmasse in Formvertiefungen, die in ein- oder mehrteiligen Formentabletts eingearbeitet sind, und Verteilen der Schokoladenmasse auf der Innenwand der Formvertiefungen durch Überlagerung von Dreh- und Schwenkbewegungen der Formentabletts.

Bislang wird bei der Herstellung von Schokoladenhalbschalen in folgender Weise vorgegangen, wie z.B. aus der US-A-1 763 085 bekannt, werden die in Formtabletts eingearbeiteten Formvertiefungen vollständig mit flüssiger Schokolade gefüllt. Sodann werden die Formentabletts um 180° gewendet, so daß die Formvertiefungen mit der Öffnung nach unten zu liegen kommen. Dadurch fließt ein Großteil der eingefüllten Schokoladenmasse wieder ab und es bleibt nur eine dünne Schokoladenschicht auf der Innenwand der Formvertiefungen zurück. Eine Schleuderbewegung der gewendeten Formentabletts trägt dazu bei, dieser Schicht eine möglichst gleichmäßige Stärke zu geben. Nach dem Erstarren der Schokoladenschicht werden die Formentabletts wieder zurückgewendet und die mit Schokoladenmasse ausgekleideten Formvertiefungen mit einer Füllung, z.B. Likör, versehen und schließlich mit einer als Deckel oder Boden dienenden Schokoladenschicht verschlossen.

Nachteilig an diesem Verfahren ist es, daß die Menge der ausfließenden Schokoladenmasse nicht exakt vorherbestimmbar ist, wodurch die in der Form verbleibende Schokoladenschicht in ihrer Stärke schwankt und von solchen Größen, wie Maschinengeschwindigkeit, Raumtemperatur, Zusammensetzung der Masse und ähnlichen Dingen abhängig ist.

Hersteller dieser Produkte sind deshalb bislang gezwungen, um eine Mindestwandstärke der Schokoladenhalbschalen, wie sie etwa aus Festigkeitsgründen benötigt wird, garantieren zu können, einen teuren Sicherheitszuschlag an Schokoladenmasse in den Formen zu belassen.

Die Herstellung von Schokoladenhohlkörpern ist komplizierter. Hierzu finden geschlossene Formen Verwendung, die durch je zwei aufeinander liegende Formentabletthälften gebildet werden, die miteinander korrespondierende Formvertiefungen aufweisen. Bei den bislang bekannten Verfahren wird dabei in folgender Weise vorgegangen:

Zunächst wird flüssige Schokoladenmasse in die Formvertiefungen der unteren Formentabletthälfte gegossen, die dann durch Auflegen der oberen Hälfte verschlossen wird. Die so geschlossenen Formentabletts werden sodann einem dreidimensionalen Schleudervorgang audgesetzt, so daß sich die darin befindliche Schokoladenmasse gleichmäßig auf der Innenwand der Formvertiefungen ablagert. Nach dem Erstarren der Schokoladenmasse wird die obere Formentabletthälfte wieder abgehoben, um die entstandenen Schokoladenhohlkörper mit Creme, Likör oder ähnlichem, zu befüllen. Dazu ist es notwendig, eine Öffnung in der Wandung des Schokoladenhohlkörpers zu schaffen, durch die die Füllung über eine Röhre eingeleitet wird. Schließlich muß die Einfüllöffnung wieder durch einen Schokoladenpropfen verschlossen werden.

Die wesentlichen Nachteile dieses bekannten Verfahrens liegen in den mit dem Einbringen der Füllung erforderlichen Schritten. So führt das Abheben der oberen Formentabletthälfte häufig zu Störungen, da die Schokoladenhohlkörper dazu neigen, in dieser Formentabletthälfte kleben zu bleiben. Das anschließende Aufstechen der Schokoladenhohlkörper mit der Füllröhre hat häufig Bruch zur Folge, was neben Materialverlust zu empfindlichen Störungen des Betriebsablaufes führt.

Die bislang bekannten Vorrichtungen zur Durchführung des geschilderten Verfahrens zur Herstellung von Schokoladenhohlkörpern lassen sich in zwei Gruppen einteilen, den Kettenanlagen und den sogenannten Sternschleudern. Die Kettenanlagen weisen kasettenartige Formenträger auf, die hintereinander an Transportketten um zwei Achsen drehbar aufgehängt sind. Die befüllten, geschlossenen Formentabletts werden am Eingang der Anlage in die Formenträger eingeschoben und auf ihrem Weg zum Ausgang der Anlage um die besagten zwei Achsen gedreht, so daß die gesamte Innenfläche der Formvertiefungen mit Schokoladenmasse benetzt wird.

Eine ähnlich wirkende Kettenanlage ist aus der DE-A-11 11 919 bekannt. Hier werden die Formentabletts allerdings nicht um zwei Achsen gedreht, sondern mittels einer um Umlenkrollen geführten Transportkette um eine erste Achse um 180° hin und hergeschwenkt, während sie gleichzeitig um eine zweite Achse gedreht werden. Auch bei dieser Vorrichtung wird die gesamte Innenfläche der Formvertiefung mit Schokoladenmasse benetzt.

Die sogenannten Sternschleudern bestehen im wesentlichen aus einem großen Zylinder, der an seiner Oberfläche eine Vielzahl von Formenträgern aufweist, die um senkrecht zur Zylinderachse verlaufende Drehachsen drehbar gelagert sind.

Die befüllten, geschlossenen Formentabletts werden in die Formenträger eingeschoben und in Drehung versetzt. Gleichzeitig läuft der Zylinder langsam um, wodurch auch hier die gesamte Innenfläche der Formvertiefungen mit Schokolade benetzt wird. Beide Vorrichtungsarten haben somit den gemeinsamen Nachteil, daß grundsätzlich die gesamte Innenfläche der Formvertiefungen mit Schokolade ausgekleidet wird, die Bildung einer Einfüllöffnung durch Aussparen eines vorherbestimmten Bereiches somit nicht möglich ist, weshalb die bereits geschilderten Probleme beim Einbringen der Füllung auftreten.

Eine erste Aufgabe der Erfindung ist daher die Schaffung eines Verfahrens zur Herstellung von Schokoladenartikeln, insbesondere von Schokoladenhalbschalen und von Schokoladenhohlkörpern mit einer Einfüllöffnung zum Einbringen einer Füllung, durch Gießen von flüssiger Schokoladenmasse in Formvertiefungen, die in ein- oder mehrteilige Formentabletts eingearbeitet sind, und Verteilen der Schokoladenmasse auf der Innenwand der Formvertiefungen, das es gestattet, Schokoladenhalbschalen mit exakt vorherbestimmtem Schokoladengewicht und gefüllte Schokoladenhohlkörper ohne die Notwendigkeit des Aufstechens, herzustellen.

Eine weitere Aufgabe der Erfindung liegt in der Schaffung einer zur Durchführung des erfindungsgemäßen Verfahrens geeigneten Vorrichtung.

Gelöst wird die erstgenannte Aufgabe der Erfindung durch die Verfahrensschritte:

a) Einfüllen einer dem Gewicht des Schokoladenartikels entsprechenden Schokoladenmasse in die Formvertiefungen der Formentabletts,
b) rotieren um eine senkrecht die Gießebene der Formentabletts durchdringende Achse und gleichzeitiges Schwenken der Formentabletts um eine in der Gießebene verlaufende Achse derart, daß die in den Formvertiefungen enthaltene Schokoladenmasse bei der Herstellung von Schokoladenhalbschalen auf der Innenwand der Formvertiefungen bis an deren Rand, bei der Herstellung von Schokoladenhohlkörpern bis auf einen auszusparenden, die Einfüllöffnung bildenden Bereich, verteilt und in dieser Verteilung zur Erstarrung gebracht wird.

Gelöst wird die zweite Aufgabe der Erfindung durch eine Gießeinrichtung zum Einbringen einer dem Gewicht der Schokoladenartikel entsprechenden Schokoladenmasse in die Formvertiefungen der Formentabletts und durch einen Kettenförderer, bestehend aus zwei parallel verlaufenden Förderketten, zwischen denen Träger angeordnet sind, die ihrerseits mit Formentablettaufnehmern zur Aufnahme von Formentabletts versehen sind, wobei die Träger Antriebsmittel zum gesteuerten Schwenken um die Längsachse der Träger und Antriebsmittel zum Drehen der Formtablettaufnehmer um eine senkrecht zur Schwenkachse der Träger aufweisen.

Weitere Merkmale der Erfindung gehen aus den Unteransprüchen sowie aus der Beschreibung und der Zeichnung hervor.

Vorteilhaft am erfindungsgemäßen Verfahren ist es, daß Schokoladenhalbschalen mit exakt vorherbestimmbarem Schokoladengewicht herstellbar sind und daß bei der Bildung der Wandung von Schokoladenhohlkörpern die Einfüllöffnung zum Einbringen von Füllungen gleich mitgebildet wird, so daß ein späteres Aufstechen mit seinen genannten Nachteilen entfällt.

Selbstverständlich kann das erfindungsgemäße Verfahren auch bei der Herstellung von geschlossenen Schokoladenhohlkörpern Anwendung finden. Ein Beispiel hierfür wäre die Herstellung von ungefüllten Ostereiern. Dazu ist einfach die Schwenkbewegung so groß zu wählen, daß die gesamte Innenfläche der Formvertiefungen von der Schokoladenmasse benetzt wird.

Im folgenden soll das erfindungsgemäße Verfahren und die zu seiner Durchführung geeignete Vorrichtung unter Bezugnahme auf die Zeichnung näher erläutert werden.

In der Zeichnung zeigen:

Fig. 1: Eine schematische Darstellung der Verfahrensschritte zur Herstellung von Schokoladenhalbschalen

Fig. 2: Die Verfahrensschritte nach Fig. 1 in ihrer Wirkung auf die Schokoladenmasse innerhalb einer Formvertiefung

Fig. 3: Verfahren zur Herstellung von Schokoladenhalbschalen in einem durch einen Deckel abgedeckten Formentablett

Fig. 4: Schematische Darstellung der wesentlichen Verfahrensschritte zur Herstellung von gefüllten Schokoladenhohlkörpern

Fig. 5: Eine Vorrichtung zur Durchführung des erfindungsgemäßen Verfahrens

Fig. 6: Eine vergrößerte Ansicht einer Teileinheit der Vorrichtung nach Fig. 5

Fig. 7: Eine schematische Darstellung des Antriebs innerhalb der Teileinheit gemäß Fig. 6

Zunächst soll das Prinzip des erfindungsgemäßen Verfahrens zur Herstellung von Schokoladenartikeln anhand der Herstellung von Schokoladenhalbschalen erläutert werden.

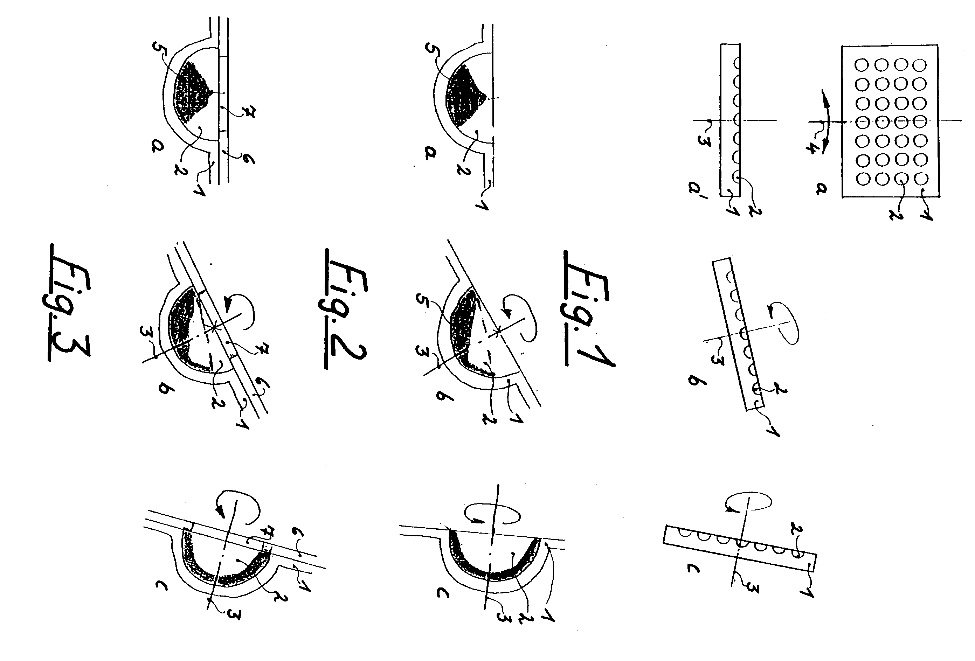

Im einfachsten Fall werden derartige Halbschalen in einteiligen, nach oben offenen Formentabletts hergestellt. Ein solches Formentablett 1 ist in Fig. 1 in schematischer Draufsicht a und in Seitenansichten dargestellt. Das Formentablett 1 weist eine Vielzahl von Formvertiefungen 2 auf, in die eine abgemessene Menge von flüssiger Schokolade eingefüllt wird. Dabei entspricht das Gewicht der eingegebenen Schokoladenmasse dem Gewicht der zu bildenden Wandung der Schokoladenhalbschale. Die befüllten Formentabletts werden sodann an eine noch näher zu erläuternde Vorrichtung zum Verteilen der Schokolade auf der Innenwand der Formvertiefungen weitergegeben. In dieser Vorrichtung wird das Formentablett 1 um die senkrecht die Gießebene durchstoßende Achse 3 gedreht, während sie gleichzeitig um eine in der Gießebene verlaufende Achse, hier die Symmetrieachse 4, geschwenkt wird, wie durch den Pfeil an Achse 4 angedeutet. Das Formentablett 1 wird dadurch, ausgehend von der waagerechten Position a' nach dem Gießvorgang in zunehmende Schräglage gebracht, wie in den Schritten b und c dargestellt.

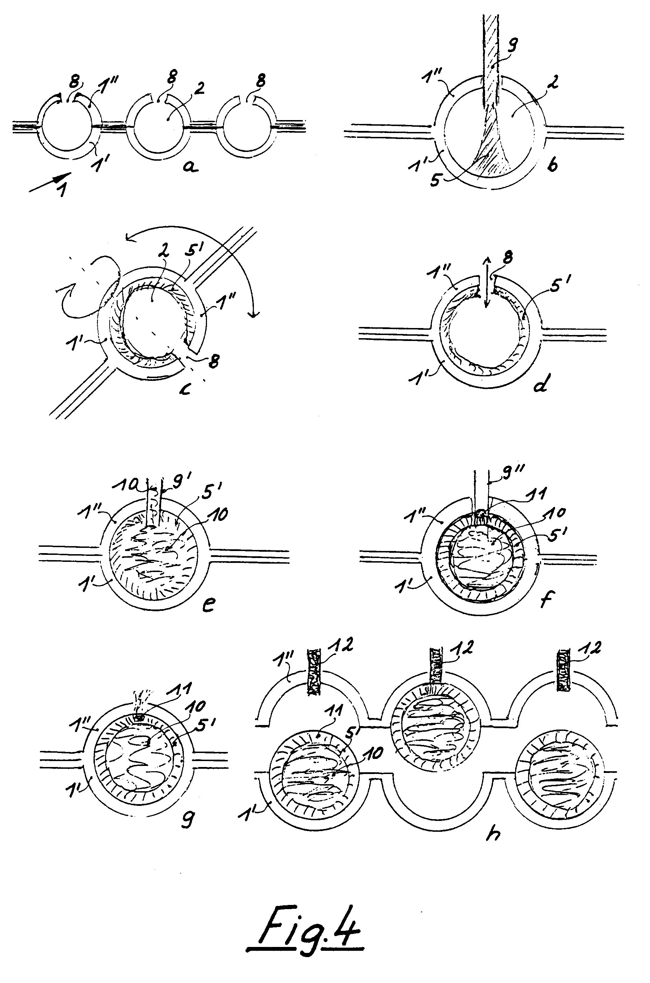

Da das Formentablett 1 dabei gleichzeitig um die Achse 3 rotiert, wird die in den Formvertiefungen 2 enthaltene Schokoladenmasse 5 auf deren Innenwandung verteilt. In Fig. 2 wird versucht, dies anhand einer vergrößerten Darstellung einer der Formvertiefungen 2 näher darzustellen. Zunächst wird gemäß Schritt a Schokoladenmasse 5 in die Formvertiefung 2 eingegossen, sodann wird das Formentablett 1 in Drehung versetzt und dabei geneigt. Die Schokoladenmasse 5 hat unter der Wirkung der Schwerkraft das Bestreben, stets im Tiefstpunkt der Formvertiefung zu bleiben. Die Formvertiefung 2 dreht sich deshalb gewissermaßen unter der flüssigen Schokolade hindurch, die aufgrund der gleichzeitigen Neigungsänderung eine spiralige Spur auf der Wandung hinterläßt. Durch entsprechend langsames oder wiederholtes Ändern der Neigung wird dabei die gesamte Innenfläche erfaßt. Drehzahl und Neigungsänderungsgeschwindigkeit sind in weiten Grenzen einstellbar und damit an die sich ändernde Konsistenz der Schokolade anpaßbar. Dabei ist darauf zu achten, daß die Schokolade wohl bis dicht an den Rand der Formvertiefung 1 heranläuft, keinesfalls aber über diesen Rand hinaustritt. Bei bereits weitgehend abgekühlter Schokoladenmasse kann dazu ein sehr steiler maximaler Neigungswinkel, wie in Schritt c dargestellt, erforderlich werden. Die Änderung des Neigungswinkels nach Abschluß des Gießvorganges kann dabei durch eine allmähliche Schwenkung um Achse 4 oder aber auch durch eine oszillierende Bewegung um diese Achse erfolgen. Letzteres kann insbesondere bei kompliziert geformten Produkten erforderlich werden, um einen gekurvten Verlauf der Schokoladenspur entlang des Randes der Formvertiefung zu erreichen. Dabei sind sowohl Frequenz und Amplitude dieser Schwenkbewegung als auch die Drehzahl der Rotation an die Formgebung des Schokoladenartikels und an die Fließeigenschaften der Schokolade anpaßbar. Schließlich kann noch einer gleichmäßigen Grundbewegung eine oszillierende Schwenkbewegung überlagert werden.

Nachdem die Schokolade hinreichend abgekühlt ist, werden die Formtabletts wieder in ihre ursprüngliche horizontale Lage zurückgeschwenkt und die Formvertiefungen 2 in bekannter und deshalb hier nicht dargestellter Weise in einer nachgeschalteten Station mit einer Füllung versehen, gedeckelt und den Formvertiefungen 2 entnommen.

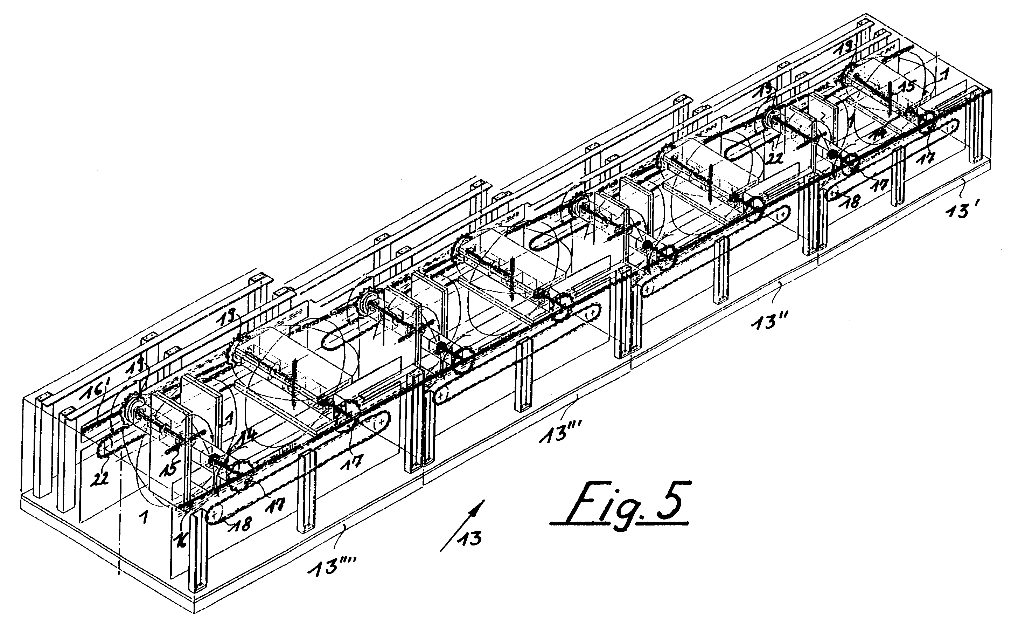

Eine Weiterbildung dieses Verfahrens zur Herstellung von Schokoladenhalbschalen ist in Fig. 3 gezeigt. Auch hier finden einteilige Formentabletts 1 Verwendung, die allerdings durch als Deckel dienende Platten 6 abgedeckt sind. Diese Platten 6 weisen Öffnungen 7 auf, die mit den Formvertiefungen 2 korrespondieren.

Die zu verteilende Schokoladenmasse 5 wird durch diese Öffnungen 7, wie in Fig. 3, Schritt a, gezeigt, in die Formvertiefungen 2 eingegeben. Ansonsten verläuft der Herstellungsprozeß wie im Beispiel zuvor beschrieben, d.h. das Formentablett 1 wird, während es um Achse 3 rotiert, um die Achse 4 geschwenkt und dadurch in seiner Neigung verändert, wie es in den Schritten b und c dargestellt ist. Die Neigung gegen Ende des Verteilungsvorganges kann dabei sehr steil gewählt werden, um ein Heranführen der Schokoladenmasse 5 bis an den Rand der Formvertiefung zu gewährleisten, da die Platte 6 ein Auslaufen der Schokoladenmasse verhindert.

Nachdem die Schokoladenmasse hinreichend ausgekühlt ist und ihre Fließfähigkeit weitestgehend verloren hat, wird das Formentablett 1 wieder in die Waagerechte zurückgeschwenkt und die Platte 6 abgehoben.

Die Formvertiefungen werden sodann in bekannter Weise mit einer Füllung und mit einer Bodenschicht aus Schokolade versehen und den Formvertiefungen entnommen.

Ganz ähnlich verläuft das Verfahren zur Herstellung von Schokoladenhohlkörpern. Hier finden allerdings zweiteilige Formentabletts 1 Anwendung, wobei Unter- und Oberteil korrespondierende Formvertiefungen aufweisen, die zusammen die Außenkontur des Schokoladenhohlkörpers darstellen. Im einfachsten Fall, wie hier im Ausführungsbeispiel gewählt, weisen Unter- und Oberteil je halbkugelförmige Formvertiefungen auf, die zusammen kugelförmige Formräume ergeben.

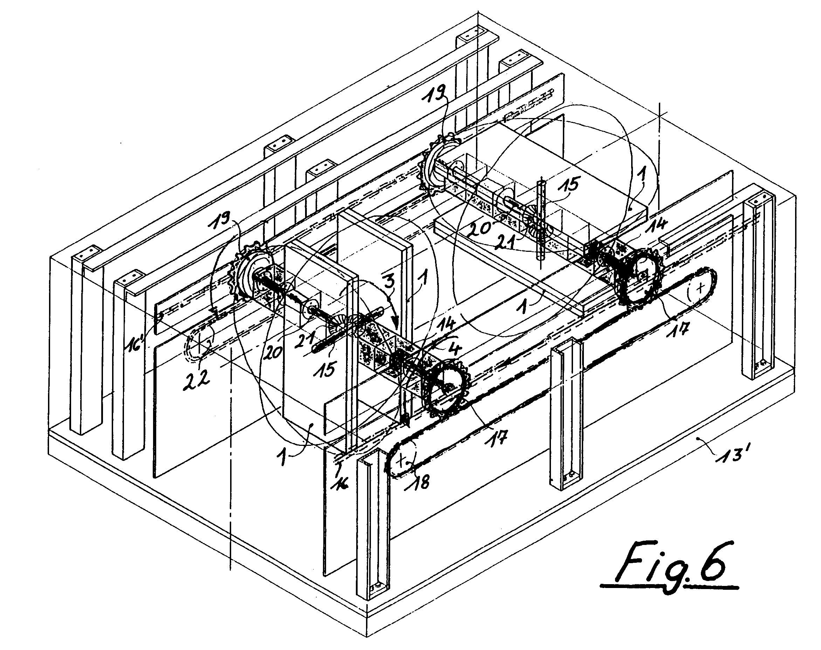

In Fig. 4 ist unter a ein Ausschnitt eines solchen Formentabletts 1 dargestellt, bestehend aus einem Unterteil 1' und einem Oberteil 1", die gemeinsam die Formvertiefungen 2 bilden. Auffallend ist hier, daß im Oberteil 1" Einfüllöffnungen 8 eingebracht sind, die einen Zugang zu den Formvertiefungen 2 bilden.

Im folgenden soll die Herstellung von Schokoladenhohlkörpern unter Verwendung dieser Formentabletts 1 näher erläutert werden:

Zunächst werden, gemäß Schritt a, Unter- und Oberteil 1' und 1" aufeinandergelegt, sodann wird, wie in Schritt b gezeigt, mit einer röhrenförmigen Düse, die in die Einfüllöffnung 8 eingeführt wird, eine abgemessene Menge von Schokoladenmasse 5 in die Formvertiefungen 2 eingebracht. Anschließend wird, wie in bereits bei der Herstellung der Schokoladenhalbschalen geschilderter Weise, das Formentablett 1 in Rotation versetzt und gleichzeitig geschwenkt, so daß, unter Aussparung des Bereiches der Einfüllöffnung 8, die Innenfläche der Formvertiefung 2 gleichmäßig mit einer Schokoladenschicht 5' ausgekleidet wird. Dieser Vorgang ist in Schritt c gezeigt. Er dauert so lange an, bis die Schokoladenschicht 5' hinreichend abgekühlt ist, um ihre Fließeigenschaften zu verlieren. Zum Einbringen der Füllung wird das Formentablett zunächst wieder, wie in d gezeigt, in die Waagerechte zurückgeschwenkt. Der Doppelpfeil im Bereich der Einfüllöffnung soll den hier während der Abkühlung stattfindenden Druckausgleich andeuten. In die nun wieder nach oben weisende Einfüllöffnung wird erneut eine Düse 9' eingeführt, durch die nunmehr, wie in Schritt e gezeigt, flüssige oder cremeartige Füllung 10 in die Formvertiefung 2 eingeleitet wird. Unmittelbar danach, ohne eine weitere Abkühlung abzuwarten, wird, gemäß Schritt f, durch eine Düse 9" der verbleibende Hohlraum mit einem Pfropf 11 aus flüssiger Schokolade verschlossen. Nach dem Abkühlen des Pfropfens 11, das relativ schnell vonstatten geht, da er, wie in g angedeutet, mit der Außenluft in Berührung steht, wird das Oberteil 1" des Formentabletts 1 abgehoben, um die fertiggestellten Schokoladenartikel zu entnehmen. Das hohe Gewicht der gefüllten Schokoladenartikel und die Belüftung des Oberteils 1" durch die Einfüllöffnungen 8 bewirken, daß sich die Artikel zumeist leicht aus dem Oberteil 1" lösen und im Unterteil 1' verbleiben. Dennoch sind oberhalb des Oberteils 1" Stempel angeordnet, die, wie in h gezeigt, beim Abheben des Oberteils 1" durch die Einfüllöffnungen eindringen und einen evtl. doch anhaftenden Schokoladenartikel herausdrücken und in das Unterteil 1' zurückbefördern. Schließlich werden die Schokoladenartikel in bekannter und daher hier nicht mehr dargestellter Weise dem Unterteil 1' entnommen und z.B. einer Verpackungsmaschine zugeführt.

Ein Ausführungsbeispiel der erfindungsgemäßen Vorrichtung 13 ist in Fig. 5 näher dargestellt. Sie weist eine Folge mehrerer gleichartig aufgebauter Sektionen 13', 13" usw. auf.

Die gefüllten Formentabletts 1 werden in waagerechter Lage, einzeln oder in Stapeln, bestehend aus zwei oder mehr Formentabletts 1 der Vorrichtung 13 zugeführt und während der Bearbeitung von rechts nach links durch die einzelnen Sektionen transportiert. Jede Sektion weist eigene Antriebsmittel zur Erzeugung der Schwenk- und Drehbewegungen der Formentabletts 1 auf, so daß eine gestufte Anpassung dieser Bewegungen an das sich mit fortschreitender Auskühlung ändernde Fließverhalten der Schokoladenmasse möglich ist.

In Fig. 6 ist die Sektion 13', stellvertretend für sämtliche Sektionen, deutlicher gezeigt. Sie weist zwei Träger 14 auf, die nicht näher dargestellte Formentablettträger tragen, in die die Formentabletts 1 eingeschoben sind. Die Formentablettaufnehmer sind drehbar auf einer Rotationswelle 15 gelagert, die senkrecht auf der Gießebene der Formentabletts 1 steht. Ein Transportkettenpaar 16,16' greift an die Träger 14 an und bewegt diese, wie durch einen Pfeil angedeutet, gleichmäßig von rechts nach links durch die gesamte Vorrichtung 13 und damit auch durch die hier in Rede stehende Sektion 13'. Auf die dem Betrachter von Fig. 6 zugewandten Stirnseite der Träger 14 ist je ein Kettenritzel 17 verdrehfest angebracht, das in eine parallel zur Transportkette 16*, der sogenannten Neigungskette 18,

\* verlaufenden Kette

eingreift. Auf der gegenüberliegenden Stirnseite der Träger 14 befindet sich ebenfalls je ein Kettenritzel 19, das über eine Welle 20 und ein Kegelradpaar 21 die Rotationswelle 15 antreibt. Dieses Kettenritzel 19 greift in eine ebenfalls zur Transportkette 16 parallel verlaufende Kette, der sog. Rotationskette 22, ein. Neigungs- und Rotationskette 18 bzw. 22 werden durch die bereits erwähnten und später noch näher erläuterten Antriebsmittel angetrieben bzw. stillgesetzt.

Im folgenden soll nun die Wirkungsweise der anhand ihrer wesentlichen Elemente beschriebenen Vorrichtung erläutert werden.

In die Formentablettaufnehmer des Trägers 14, rechts in Fig. 6, seien soeben zwei neue Formentabletts 1 einge schoben worden. Durch die Bewegung der Transportkette 16,16' wird der Träger 14 nach rechts gezogen, wodurch die Ritzel 17 und 19 mit der Neigungs- bzw. Rotationskette 18 bzw. 22 in Eingriff gelangen. Betrachten wir zunächst die Wirkung der Neigungskette 18 auf den Träger 14 und damit auf die Formentabletts 1. Die Neigungskette 18 kann stillgesetzt oder in Bewegung sein. Im erstgenannten Fall ist die Wirkung eindeutig. Das Ritzel 17 rollt in der Neigungskette 18 ab, wodurch der Träger 14 auf seinem Weg durch die Vorrichtung um seine Längsachse rotiert. Bei bewegter Neigungskette sind verschiedene Fälle denkbar, z.B., daß die Neigungskette 18 in Richtung der Transportkette 16 bewegt wird, mit einer Geschwindigkeit, die geringer ist als die Geschwindigkeit der Transportkette 16. Hierbei kommt es wieder zu einer Rotation des Trägers 14 im gleichen Drehsinn, wie im zuvor betrachteten Beispiel, allerdings mit verringerter Drehzahl. Wird die Geschwindigkeit der Neigungskette 18 auf Gleichlauf mit der Transportkette 16 gesteigert, findet kein Abrollen des Ritzels 17 und somit keine Rotation des Trägers 14 mehr statt. Wird schließlich die Geschwindigkeit der Neigungskette 18 weiter erhöht, auf einen Wert der über der Geschwindigkeit der Transportkette 16 liegt, so erfolgt eine Umkehrung des Drehsinns der Rotation des Trägers 14. Nun ist aber eine Rotation der Formentabletts 1, von Ausnahmen abgesehen, um diese Achse nicht erwünscht. Angestrebt wird vielmehr, aus den eingangs genannten Gründen, eine Schwenkbewegung der Träger 14, die zu einer Schwenkbewegung der Formentabletts 1 aus der Waagerechten in eine geneigte Position und wieder zurück bewirkt. Dabei kann ein einzelner Schwenkzyklus über mehrere Sektionen 13',13" usw. verlaufen, andererseits können aber auch mehrere Zyklen innerhalb einer einzelnen Sektion durchlaufen werden. Erreicht wird die Schwenkbewegung jedoch stets, indem die mittlere Geschwindigkeit der Neigungskette 18 gleich der Geschwindigkeit der Transportkette 16 gewählt wird, ihre Momentangeschwindigkeit aber abwechselnd höher oder niedriger liegt.

Ähnlich erfolgt die Einleitung der Rotationsbewegung der Formentabletts 1. Auch hier wird der Antrieb durch das Abrollen eines Ritzels in einer Kette, nämlich Ritzel 19 in der Rotationskette 22 erzeugt. Die Rotationsbewegung des Ritzels 19 gelangt über die Welle 20 und über das Kegelradpaar 21 auf die Rotationswelle 15 und damit auf die Formentabletthalter bzw. die Formentabletts 1. Geschwindigkeit und Richtung der Rotation sind allerdings nicht nur von der Geschwindigkeitsdifferenz zwischen Transportkette 16 und Rotationskette 22 abhängig, sondern hier geht zusätzlich die Schwenkbewegung der Träger 14 mit ein. Dies wird klar, wenn man sich vor Augen führt, daß die Rotation der Formentabletts 1 durch eine Relativbewegung zwischen Träger 14 und Kettenritzel 19 ausgelöst wird, wobei es gleichgültig ist, ob das Ritzel gegenüber dem Träger 14 oder umgekehrt Träger 14 gegenüber dem Ritzel 19 verdreht wird.

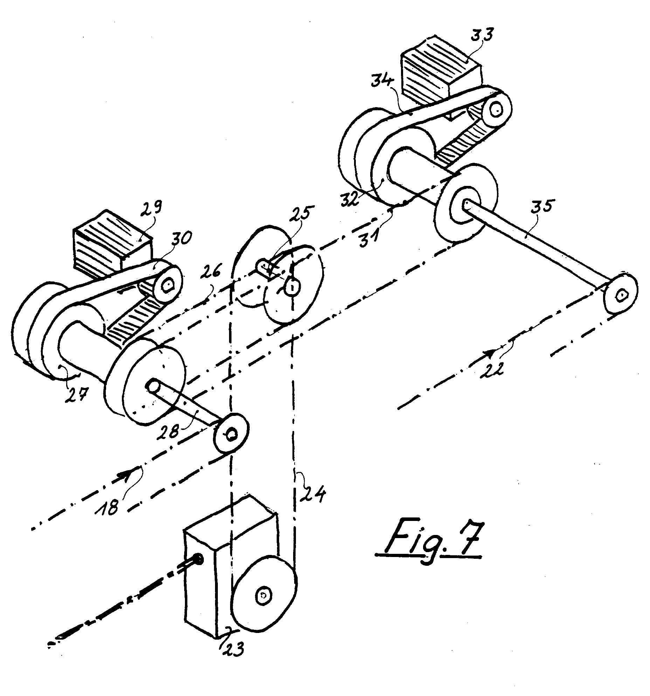

Nun ist die Schwenkbewegung zumeist recht langsam, so daß die dadurch hervorgerufene Rotationsbewegung oftmals in Kauf genommen werden kann. Doch bestehen auch Möglichkeiten zur Kompensation dieser ungewollten Rotationsbewegung. Hier soll nun, im Zuge der noch ausstehenden Erläuterung des Antriebssystems von Neigungs- und Rotationskette 18 bzw. 22, eine besonders einfache und wirksame mechanische Lösung gezeigt werden. Fig. 7 stellt schematisiert dieses Antriebssystem dar. Dort ist gezeigt, wie von einer Hauptantriebswelle über ein Getriebe 23 und eine Kette 24 der Antrieb für die Transportkette 16, hier durch eine von Kette 24 angetriebene Welle 25 angedeutet, abgeleitet wird. Von derselben Welle 25 wird über eine Kette 26 und ein Differentialgetriebe 27 über dessen Abtriebswelle 28 die Neigungskette 18 angetrieben. Außerdem wirkt ein Servomotor 29 über einen Zahnriemen 30 auf das Differentialgetriebe 27 ein. Steht dieser Servomotor 29 still, so wird die Bewegung der Transportkette 16 bzw. deren Antriebswelle 25 unverändert auf die Neigungskette 18 übertragen. Transportkette 16 und Neigungskette 18 stimmen dann in Bewegungsrichtung und Geschwindigkeit exakt überein, es findet also keine Schwenkbewegung der Träger 14 statt. Bewegt sich der Servomotor 29, so wird dessen Bewegung über das Differentialgetriebe 27 der durch die Transportkettenbewegung hervorgerufenen Bewegung überlagert. Die Abtriebswelle 28 des Differentialgetriebes 27 treibt somit die Neigungskette 18 mit einer Geschwindigkeit an, die je nach Drehrichtung des Servomotors 29 gleich der Summe bzw. Differenz aus Transportkettengeschwindigkeit und Servomotorbewegung ist. Da die Schwenkbewegung, wie bereits zuvor dargestellt, der Differenz von Neigungsketten- und Transportkettenbewegung entspricht, und der Servomotor 29 über das Differentialgetriebe 27 eben diese Differenz erzeugt, ist die Schwenkbewegung nur noch eine Funktion der Bewegung des Servomotors 29, die Transportkettenbewegung ist neutralisiert.

Von der Antriebswelle 28 des Differentialgetriebes 27 wird die dort anstehende Summe aus Schwenk- und Transportkettenbewegung über eine Kette 31 als Antrieb für die Rotationskette 22 abgenommen und einem Differentialgetriebe 32 zugeführt. Außerdem wird diesem Differentialgetriebe 32, in gleicher Weise wie zuvor zur Erzeugung der Schwenkbewegung, die Bewegung eines Servomotors 33 über einen Zahnriemen 34 zugeführt. Steht dieser Servomotor 33 still, so wird die Bewegung der Antriebskette 31 unverändert über die Welle 35 auf die Rotationskette 22 übertragen, d.h. bei stillstehendem Servomotor 33 bewegt sich die Rotationskette 22 mit einer Geschwindigkeit, die gleich der Summe der Transportketten- und Neigungskettenbewegung ist. Es findet somit keine Relativbewegung zwischen Kettenritzel 19 und Träger 14 und somit auch keine Rotationsbewegung der Formentabletts 1, trotz Schwenkbewegung, statt.

Neigungskettenbewegung und Transportkettenbewegung sind neutralisiert, wirksam bleibt nur die Bewegung des Servomotors 33. Die Rotationsbewegung ist somit ausschließlich eine Funktion der Bewegung des Servomotors 33 und in gewünschter Weise unabhängig von Schwenk- und Transportbewegung.

**Patentansprüche**

1. Verfahren zur Herstellung von Schokoladenartikeln, insbesondere von Schokoladenhalbschalen und von Schokoladenhohlkörpern mit einer Einfüllöffnung zum Einbringen einer Füllung, durch Gießen von flüssiger Schokoladenmasse in Formvertiefungen, die in ein- oder mehrteilige Formentabletts eingearbeitet sind, und Verteilen der Schokoladenmasse auf der Innenwand der Formvertiefungen durch Überlagerung von Dreh- und Schwenkbewegungen der Formentabletts, gekennzeichnet durch die Schritte:

   a) Einfüllen einer dem Gewicht des Schokoladenartikels entsprechenden Schokoladenmasse (5) in die Formvertiefungen (2) der Formentabletts (1),
   b) rotieren um eine senkrecht die Gießebene der Formentabletts (1) durchdringende Achse (3) und gleichzeitiges Schwenken der Formentabletts (1) um eine in der Gießebene verlaufende Achse (4) derart, daß die in den Formvertiefungen (2) enthaltene Schokoladenmasse (5) bei der Herstellung von Schokoladenhalbschalen auf der Innenwand der Formvertiefungen bis an deren Rand, bei der Herstellung von Schokoladenhohlkörpern bis auf einen auszusparenden, die Einfüllöffnung bildenden Bereich, verteilt und in dieser Verteilung zur Erstarrung gebracht wird.

2. Verfahren nach Anspruch 1 mit einer in die Schokoladenartikel eingebrachten Füllung, gekennzeichnet durch die Schritte:

   a) Einfüllen einer dem Schokoladengewicht des Schokoladenartikels ohne Boden bzw. ohne Verschlußstopfen (11) entsprechenden Menge von Schokoladenmasse (5) in die Formvertiefungen (2) der Formentabletts (1),

b) rotieren und gleichzeitiges Schwenken der Formentabletts derart, daß die in den Formvertiefungen (2) enthaltene Schokoladenmasse (5) bei der Herstellung von Schokoladenhalbschalen auf der Innenfläche der Formvertiefungen bis an deren Rand, bei der Herstellung von Schokoladenhohlkörpern bis auf einen auszusparenden, die Einfüllöffnung (8) bildenden Bereich verteilt und in dieser Verteilung zur Erstarrung gebracht wird,

c) Eingießen einer Füllung (10) in die mit Schokolade ausgekleideten Formvertiefungen (2),

d) Verschließen der Schokoladenhalbschalen bzw. Schokoladenhohlkörper durch Aufgießen eines Bodens bzw. Eingießen eines Verschlußstopfens (11) und

e) Entnehmen der Schokoladenartikel aus den Formvertiefungen (2).

3. Verfahren nach Anspruch 1, dadurch gekennzeichnet, daß die Rotation der Formentabletts (1) um deren Schwerachse erfolgt und daß deren Schwenkbewegung eine oszillierende Bewegung ist.

4. Verfahren nach Anspruch 1, dadurch gekennzeichnet, daß die Drehzahl der Rotation und Frequenz und Amplitude der oszillierenden Schwenkbewegung frei wählbar sind und in Anpassung an die Erstarrung der Schokoladenmasse im Verlauf des Herstellungsprozesses verändert werden.

5. Verfahren zur Herstellung von Schokoladenhohlkörpern nach Anspruch 1, dadurch gekennzeichnet, daß das Einfüllen der Schokoladenmasse (5) in die Formvertiefungen (2) bei geschlossenen Formentabletts (1) durch in den Oberteil (1") der Formentabletts (1) eingearbeitete Einfüllöffnungen (8) erfolgt.

6. Verfahren zur Herstellung von gefüllten Schokoladenhohlkörpern nach Anspruch 2, dadurch gekennzeichnet, daß das Einfüllen der Füllung (10) in die, bis auf den Bereich der Einfüllöffnung (8) mit einer Schokoladenschale (5') ausgekleideten Formvertiefungen (2), bei geschlossenen Formtabletts (1) durch die in den Oberteil (1") der Formtabletts (1) eingearbeitete, mit der Öffnung in der Schokoladenschale (5') korrespondierende Einfüllöffnung (8) erfolgt.

7. Verfahren zur Herstellung von Schokoladenhalbschalen nach Anspruch 1 und 2, dadurch gekennzeichnet, daß die Formtabletts (1) vor dem Befüllen der Formvertiefungen (2) mit Schokoladenmasse (5) durch eine Platte (6) abgedeckt werden, die mit den Formvertiefungen (2) korrespondierende Einfüllöffnungen aufweisen.

8. Vorrichtung zur Durchführung des Verfahrens nach Anspruch 1, gekennzeichnet durch eine Gießeinrichtung zum Einbringen einer dem Gewicht der Schokoladenartikel entsprechenden Schokoladenmasse in die Formvertiefungen (2) der Formentabletts (1) und durch einen Kettenförderer, bestehend aus zwei parallel verlaufenden Förderketten (16), zwischen denen Träger (14) angeordnet sind, die ihrerseits mit Formentablettaufnehmern zur Aufnahme von Formentabletts (1) versehen sind, wobei die Träger (14) Antriebsmittel (17) zum gesteuerten Schwenken um die Längsachse der Träger und Antriebsmittel (19) zum, Drehen der Formtablettaufnehmer um eine senkrecht zur Schwenkachse der Träger aufweisen.

9. Vorrichtung nach Anspruch 8, dadurch gekennzeichnet, daß die Antriebsmittel der Träger (14) aus je einem Kettenritzel (17, 19) an den Stirnseiten der Träger (14) bestehen, die in parallel zu den Förderketten (16) verlaufenden Steuerketten (18,22) eingreifen.

10. Vorrichtung nach Anspruch 9, dadurch gekennzeichnet, daß das für das Drehen der Formentabletts verantwortliche Kettenritzel (19) über ein Kegelradpaar (21) mit der Rotationswelle (15) der Formentablettaufnehmer in Wirkverbindung steht, das für die gesteuerte Schwenkbewegung verantwortliche Kettenritzel (17) hingegen verdrehfest mit dem Träger (14) verbunden ist.

11. Vorrichtung nach Anspruch 9, dadurch gekennzeichnet, daß die parallel zu den Förderketten (16) verlaufenden Steuerketten (18,22) in mehrere Abschnitte aufgeteilt sind, die unabhängig voneinander antreibbar sind.

12. Vorrichtung nach Anspruch 11, dadurch gekennzeichnet, daß der Antrieb der Steuerkette (18) für die Schwenkbewegung durch Summen- oder Differenzbildung mittels eines Differentialgetriebes (27) aus den Bewegungen der Förderkette (16) und eines Servomotors (29) hergeleitet wird, und daß der Antrieb der Steuerkette (22) für die Rotationsbewegung durch Summen- oder Differenzbildung mittels eines weiteren Differentialgetriebes (32) aus der Bewegung der Steuerkette (18) für die Schwenkbewegung und eines weiteren Servomotors (33) hergeleitet wird.

## Claims

1. Method for producing chocolate articles, particularly for chocolate half shells and hollow chocolate bodies with an filling hole for introducing a filling, by pouring liquid chocolate mass into mould cavities which are incorporated in one-part- or multiple-part- mould trays and spreading the chocolate mass on the inner wall of the mould cavities by superposition of rotation and swing movements of the mould trays, characterized by the following steps:

   a) Filling an amount of chocolate mass (5) which corresponds to the weight of the chocolate article into the mould cavities (2) of the mould trays (1).

   b) Rotating around an axis (3) which is orientated perpendicular with respect to the moulding plane of the mould trays (1) and simultaneous swinging of the mould trays (1) around an axis (4) lying within the moulding plane, in a way that during the production of chocolate half shells the chocolate mass (5) contained within the mould cavities (2) is spread over the inner wall up to the edge of the mould cavity (2), during the production of hollow chocolate bodies the chocolate mass is spread up to a blank area which constitutes a filling hole, and in this distribution is set to solidification.

2. Method as claimed in claim 1 with a filling which is introduced in to the chocolate articles, characterized by the following steps:

   a) Filling an amount of chocolate mass (5) which corresponds to the weight of the chocolate article without bottom or without a stopper (11), respectively, into the mould cavities (2) of the mould trays (1),

   b) Rotating and simultaneously swinging of the mould tray in a way that the chocolate mass (5) contained within the mould cavities (2) during the production of chocolate half shells is spread over the inner wall up the edges of the mould cavities (2), and during the production of hollow chocolate bodies is spread up to a blank area which constitutes a filling hole (8), and in this distribution is set to solidification,

   c) Pouring of a filling (10) into the mould cavities (2) which are coated with chocolate,

   d) Closing of the chocolate half shells or the hollow chocolate bodies, respectively, by pouring a bottom or pouring a stopper (11), respectively, and

   e) Taking the chocolate articles out of the mould cavties (2).

3. Method as claimed in claim 1, characterized in that the rotation of the mould trays (1) takes place around their gravity axis and that their swinging movement is an oscillating movement.

4. Method as claimed in claim 1, characterized in that the number of revolutions of the rotation and the frequency and amplitude of the oscillating swinging movement are free chooseable and during the course of the production process are changed in adaption to the solidification of the chocolate mass.

5. Method for producing hollow chocolate bodies as claimed in claim 1, characterized in that the filling of the chocolate mass (5) into the mould cavities (2) with the mould trays (1) closed takes place through filling holes (8) which are incorporated in the upper part (1") of the mould trays (1).

6. Method for producing hollow chocolate bodies with a filling as claimed in claim 2, characterized in that the pouring of the filling (10) in to the mould cavities (2) which are coated with a chocolate shell (5') up to the area of the filling hole (8) while the mould tray (1) is closed takes place through the filling hole (8) which is incorporated in the upper part (1") of the mould trays (1), said filling hole (8) corresponding with the opening in the chocolate shell (5').

7. Method for producing chocolate half shells as claimed in claim 1 and 2, characterized in that the mould trays (1) before filling the mould cavities (2) with chocolate mass (5) are covered by a plate (6) which has filling holes which correspond to the mould cavities (2).

8. Apparatus for carrying out the method as claimed in claim 1, characterized by a pouring outfit for placing an amount of chocolate mass which corresponds to the weight of the chocolate article into the mould cavities (2) of the mould trays (1) and by a chain conveyor consisting of two parallel running conveying chains (16) with carriers (14) arranged between them which for their part provide mould tray supports for supporting mould trays (1), said carriers (14) having driving means (17) for controlled swinging around the longitudinal axis of the carriers and driving means (19) for rotating the mould tray supports around an axis which is perpendicular to the swing axis of the carriers.

9. Apparatus as claimed in claim 8, characterized in that the driving means of the carriers (14) each consist of one chain wheel (17, 19) on each frontside of the carrier (14), said chain wheel gripping in control chains (18, 22) which are runnig parallel to the conveying chains (16).

10. Apparatus as claimed in claim 9, characterized in that the chain wheel (19) which is responsable for the rotation of the mould tray, is in operativ connection with a rotation shaft (15) of the mould tray support by means of a pair of bevel gears (21), said chain wheel (17) which is responsable for the swinging movement however is unrotationable connected with the carrier (14).

11. Apparatus as claimed in claim 9, characterized in that the control chains (18, 22) which are running parallel to the conveying chains (16) are divided into several sections which can be run independently from one another.

12. Apparatus as claimed in claim 11, characterized in that the motive power of the control chain (18) for the swinging movement is deduced by sum or difference operation by means of a differential gear (27) out of the motions of the conveying chain (16) and of a servomotor (29) and that the motive power of the control chain (22) for the rotation movement is deduced by sum or difference operation by means of a further differential gear (32) out of the motions of the control chain (18) for the swinging movement and a further servomotor (33).

**Revendications**

1. Procédé de fabrication d'articles en chocolat, en particulier de demi-coques en chocolat et de corps creux en chocolat comportant une ouverture de remplissage pour l'introduction d'un fourrage, par coulée d'une masse de chocolat liquide dans des cavités de moulage, qui sont usinées dans des tablettes de moulage en une ou plusieurs parties et par répartition de la masse de chocolat sur la paroi intérieure des cavités de moulage par superposition de déplacements par rotation et par pivotement des tablettes de moulage, caractérisé par les étapes suivantes:

   a) introduction d'une masse (5) de chocolat correspondant au poids de l'article en chocolat dans les cavités (2) de moulage de la tablette (1) de moulage;
   b) rotation sur un axe (3) traversant une tablette de moulage (1) perpendiculairement au plan de coulée et par pivotement simultané de la tablette (1) de moulage sur un axe (4) s'étendant dans le plan de moulage, de façon telle que la masse (5) de chocolat contenue dans les cavités (2) de moulage de la tablette de moulage, soit répartie, dans le cas de la fabrication de demi-coques en chocolat, sur la paroi intérieure des cavités de moulage jusqu'à leur bord, et dans le cas de la fabrication de corps creux en chocolat, à l'exception d'une zone qui doit être préservée, formant l'ouverture de remplissage, et amenée à l'état solide dans cet état de répartition.

2. Procédé selon la revendication 1 comportant un fourrage introduit dans l'article en chocolat, caractérisé par les étapes suivantes:

   a) introduction d'une quantité de masse de chocolat (5) correspondant au poids de chocolat de l'article en chocolat sans fond ou sans bouchon de fermeture (11), dans les cavités de moulage (2) de la tablette de moulage (1);
   b) mise en rotation, et simultanément, en pivotement de la tablette de moulage, de façon telle que la masse (5) de chocolat contenue dans les cavités de moulage (2) soit répartie, lors de la fabrication de demi-coques de chocolat sur la surface inférieure des cavités de moulage jusqu'au bord de celles-ci, lors de la fabrication de corps creux en chocolat à l'exception d'une zone constituant l'ouverture de remplissage, qui doit être préservée, et amenée à l'état solide dans cet état de répartition;
   c) introduction par coulée d'un fourrage (10) dans les cavités de moulage (2) revêtues de chocolat;
   d) fermeture des demi-coques en chocolat, ou des corps creux en chocolat par coulée d'un fond par le dessus, ou par introduction par coulée d'un bouchon de fermeture (11);
   e) enlèvement des articles en chocolat hors des cavités de moulage (2).

3. Procédé selon la revendication 1, caractérisé en ce que la rotation des tablettes de moulage (1) s'effectue sur leur axe de gravité et en ce que leur mouvement de pivotement est un mouvement oscillant.

4. Procédé selon la revendication 1, caractérisé en ce que la vitesse de rotation, ainsi que la fréquence et l'amplitude du mouvement de pivotement oscillant peuvent être choisies librement et être modifiées au cours du processus de fabrication pour s'adapter à la solidification de la masse de chocolat.

5. Procédé de fabrication de corps creux en chocolat selon la revendication 1, caractérisé en ce que l'introduction de la masse (5) de chocolat dans les cavités de moulage (2) dans les tablettes de moulage (1) fermées s'effectue par des ouvertures de remplissage (8) réalisées dans la partie supérieure (1") des tablettes de moulage (1).

6. Procédé de fabrication de corps creux en chocolats fourrés selon la revendication 2, caractérisé en ce que l'introduction du fourrage (10) dans les cavités de moulage (2) revêtues d'une coque (5') de chocolat, à l'exception de la zone de l'ouverture de remplissage (8), s'effectue, les tablettes de moulage (1) étant fermées, par l'intermédiaire de l'ouverture de remplissage (8) réalisée dans la partie supérieure (1") des tablettes de moulage (1), qui correspond à l'ouverture existant dans la coque (5') en chocolat.

7. Procédé de fabrication de demi-coques en chocolat selon les revendications 1 et 2, caractérisé en ce que les tablettes de moulage (1) sont recouvertes, avant le remplissage des cavités de moulage (2) avec la masse (5) de chocolat, au moyen d'une plaque (6), présentant des ouvertures de remplissage qui correspondent aux cavités de moulage (2).

8. Dispositif pour l'exécution du procédé selon la revendication 1, caractérisé par un dispositif de coulée destiné à introduire dans les cavités de moulage (2) de la tablette de moulage (1) une masse de chocolat correspondant au poids des articles en chocolat, et par un convoyeur à chaînes constitué de deux chaînes de transport (16) qui s'étendent parallèlement et qui sont disposées entre les supports (14) de celui-ci et qui, de leur côté, sont munies d'éléments de réception de tablettes de moulage en vue de recevoir des tablettes de moulage (1), les supports (14) présentant des moyens d'entraînement (17) destinés à provoquer le pivotement commandé sur l'axe longitudinal des supports et des moyens d'entraînement (19) destinés à la mise en rotation des éléments de réception de tablettes de moulage sur un axe perpendiculaire à l'axe de pivotement des supports.

9. Dispositif selon la revendication 8, caractérisé en ce que les moyens d'entraînement des supports (14) se composent chacun d'un pignon (17, 19) pour chaîne qui sont disposés sur les côtés frontaux des supports (14) et qui attaquent les chaînes de commande (18, 22) qui s'étendent parallèlement aux chaînes de transport (16).

10. Dispositif selon la revendication 9, caractérisé en ce que le pignon (19), pour chaîne servant à mettre en rotation les tablettes de moulage, est en liaison fonctionnelle avec l'arbre (15) de rotation des éléments de réception des tablettes de moulage, par l'intermédiaire d'une paire de roues coniques (21) et en ce que le pignon (17) pour chaîne chargé du mouvement de pivotement commandé, est au contraire relié de façon fixe au support (14).

11. Dispositif selon la revendication 9, caractérisé en ce que les chaînes de commande (18, 22) qui s'étendent parallèlement aux chaînes de transport (16) sont divisées en plusieurs tronçons qui sont susceptibles d'être entraînés indépendamment les uns des autres.

12. Dispositif selon la revendication 11, caractérisé en ce que l'entraînement de la chaîne de commande (18), en ce qui concerne le mouvement de pivotement, provient de la réalisation de sommes ou de différences au moyen d'un dispositif d'engrenages différentiel (27), à partir des mouvements de la chaîne de transport (16) et d'un servomoteur, et en ce que l'entraînement de la chaîne de commande (22), en ce qui concerne le mouvement de rotation, provient de la réalisation de sommes ou de différences au moyen d'un autre dispositif d'engrenages différentiel (32), à partir du mouvement de la chaîne de commande (18) concernant le mouvement de pivotement et d'un servomoteur (33) supplémentaire.

_Fig. 1_

_Fig. 2_

_Fig. 3_

**Fig.4**

_Fig. 5_

*Fig.6*

_Fig. 7_